# EUROPEAN PATENT APPLICATION

(11) **EP 4 707 912 A1**
(43) Date of publication of application: **11.03.2026**
(21) Application number: 23936430.0
(22) Date of filing: 20.11.2023
(51) Int. Cl.: G02F 1/167

(54) **ELECTRONIC PAPER SCREEN MODULE**

(30) Priority: 05.05.2023 CN 202321082624 U
(71) Applicant: Hanshow Technology Co., Ltd., Jiaxing, Zhejiang 314031 (CN)
(72) Inventor: LI, Yanchen, Jiaxing, Zhejiang 314031 (CN); TIAN, Xiang, Jiaxing, Zhejiang 314031 (CN); WU, Zhaoyun, Jiaxing, Zhejiang 314031 (CN); ZHAO, Jianguo, Jiaxing, Zhejiang 314031 (CN); HOU, Shiguo, Jiaxing, Zhejiang 314031 (CN)
(74) Representative: IP TRUST SERVICES
(86) International application number: PCT/CN2023/132590
(87) International publication number: WO 2024/230126

(57) **Abstract**

An electronic paper screen module, including a substrate provided with a first light-transmitting portion; a circuit board, at least part of which is stacked with the substrate; and a light-emitting element disposed on the circuit board and located opposite to the first light-transmitting portion, so that light emitted by the light-emitting element can pass through the first light-transmitting portion from one side of the substrate to the other side facing away from the circuit board. The present disclosure solves the technical problem that the size and the cost of the electronic paper screen are increased due to the disposing of an LED lamp.

## Description

### RELATED APPLICATION

The present disclosure claims priority to Chinese Patent Application No. 202321082624.3 filed on May 5, 2023, which is hereby incorporated by reference in its entirety.

### TECHNICAL FIELD

The present disclosure relates to the field of electronic display technologies, and particularly to an electronic paper screen module.

### BACKGROUND

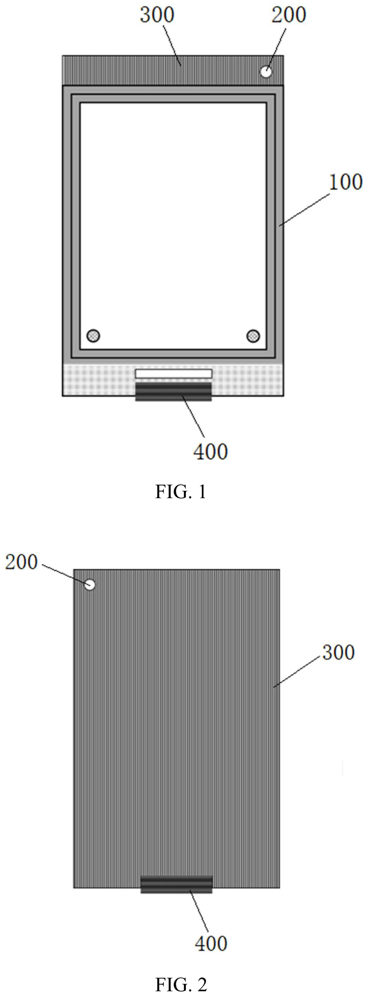

The electronic paper screen module is a type of display screen manufactured using electrophoretic display technology, which applies a driving voltage to each pixel through a control circuit located on a substrate (i.e., thin-film transistor (TFT) substrate) 100 to achieve the effect of displaying images. In order to realize various functions such as status display and position reminder through the electronic paper screen module, the application of lighting element in the electronic paper screen module has become increasingly widespread. As illustrated in FIGS. 1 and 2, in conventional products, an LED lamp 200 is usually disposed on a PCB board 300to realize functions such as status indication and flashing reminder. The PCB board 300 is stacked on the back of the TFT substrate 100, and the PCB board 300 is connected to the TFT substrate 100 through a flexible circuit board 400, so as to realize signal transmission between the PCB board 300 and the electronic paper screen. However, the conventional electronic paper screen modules are opaque within the range of the TFT substrate 100. To allow efficient light transmission, the LED lamp 200 needs to be placed outside the range of the TFT substrate 100, thereby avoiding the blocking of light by the TFT substrate 100. However, this arrangement inevitably leads to an increase in the size of the PCB board 300, which not only enlarges the bezel size of the electronic paper screen but also increases the cost of the PCB board 300.

Regarding the problem in the related art that the disposing of the LED lamp leads to increases in the size and the cost of the electronic paper screen, no effective solution has yet been proposed.

Therefore, relying on years of experience and practice in the related industries, the inventor proposes an electronic paper screen module to overcome the defects of the prior art.

### SUMMARY

The present disclosure aims to provide an electronic paper screen module, in which a light-transmitting area is disposed on an electronic paper screen and located within a substrate, and an LED lamp is disposed at a position corresponding to the light-transmitting area, so that the LED lamp can be positioned within the range of the substrate while still achieving good display effect, thereby reducing the size and cost of the electronic paper screen.

The objective of the present disclosure can be achieved by the following solutions.

The present disclosure provides an electronic paper screen module, including a substrate, a circuit board, and a light-emitting element. The substrate is provided with a first light-transmitting portion. At least part of the circuit board is stacked with the substrate. The light-emitting element is disposed on the circuit board and located opposite to the first light-transmitting portion, so as to allow light emitted by the light-emitting element to pass through the first light-transmitting portion from one side of the substrate to the other side facing away from the circuit board.

In an embodiment of the present disclosure, the electronic paper screen module further includes an electronic paper film, and a protective film made of a light-transmitting material. The substrate, the electronic paper film, and the protective film are stacked in a direction from being close to the light-emitting element to being far away from the light-emitting element.

In an embodiment of the present disclosure, the electronic paper film is provided with a second light-transmitting portion. The first light-transmitting portion, the second light-transmitting portion, and an area of the protective film opposite to the second light-transmitting portion together define a light-transmitting channel.

In an embodiment of the present disclosure, a plurality of electrical connection points are disposed between the electronic paper film and the substrate, and are configured to connect electrodes of the substrate to electrodes of the electronic paper film, respectively. The second light-transmitting portion is located at a position of at least one of the electrical connection points. The first light-transmitting portion, the second light-transmitting portion, and the area of the protective film opposite to the second light-transmitting portion together define a light-transmitting channel.

In an embodiment of the present disclosure, a first connecting member made of a light-transmitting material is disposed between the protective film and the substrate, and the first connecting member is disposed around a periphery of the electronic paper film. The first light-transmitting portion, an area of the first connecting member opposite to the first light-transmitting portion, and the area of the protective film opposite to the first light-transmitting portion together define the light-transmitting channel.

In an embodiment of the present disclosure, the second light-transmitting portion is disposed in an edge position of the electronic paper film. The first light-transmitting portion, the second light-transmitting portion, the area of the first connecting member opposite to the first light-transmitting portion, and the area of the protective film opposite to the first light-transmitting portion together define the light-transmitting channel. In an emission direction of the light, a first light-mixing element for uniform light emission is disposed downstream of the first connecting member and the second light-transmitting portion, and is positioned opposite the first light-transmitting portion.

In an embodiment of the present disclosure, the first connecting member is made of a transparent or semi-transparent edge-sealing material.

In an embodiment of the present disclosure, a second connecting member made of a light-transmitting material is disposed on the substrate, and is configured to fix a connection position between the circuit board and the substrate. The first light-transmitting portion and an area of the second connecting member opposite to the first light-transmitting portion together define the light-transmitting channel.

In an embodiment of the present disclosure, the first light-transmitting portion, the area of the second connecting member opposite to the first light-transmitting portion, the area of the first connecting member opposite to the first light-transmitting portion, and the area of the protective film opposite to the first light-transmitting portion together define the light-transmitting channel. In an emission direction of the light, a second light-mixing element for uniform light emission is disposed downstream of the first connecting member, the second connecting member and the protective film, and is positioned opposite the first light-transmitting portion.

In an embodiment of the present disclosure, the second connecting member is made of a transparent or semi-transparent adhesive material.

In an embodiment of the present disclosure, the circuit board is a flexible printed circuit board, which is extended to a position overlapping with the substrate, and the light-emitting element is disposed on the flexible printed circuit board.

In an embodiment of the present disclosure, the circuit board includes a flexible printed circuit board and a PCB board, the PCB board is connected to the substrate through the flexible printed circuit board and is located at a position overlapping with the substrate, and the light-emitting element is disposed on the PCB board.

As can be seen from the above description, the electronic paper screen module of the present disclosure has the following characteristics and advantages: at least part of the circuit board is stacked with the substrate, the first light-transmitting portion is formed on the substrate, and the light-emitting element is disposed on the circuit board and located opposite to the first light-transmitting portion, so that the substrate has the ability to efficiently transmit light by disposing the first light-transmitting portion. Therefore, the light emitted by the light-emitting element can pass through the first light-transmitting portion from one side of the substrate to the other side opposite to the circuit board This arrangement not only ensures the normal use of the light-emitting element, but also eliminates the need to increase the area of the circuit board for the placement of the disposing of the light-emitting element. Consequently, it avoids the need to enlarge the bezel of the electronic paper screen and ensures that the light-emitting element still achieves a good light-emission effect within the range of the substrate, thereby contributing to reducing both the size and cost of the electronic paper screen.

### BRIEF DESCRIPTION OF THE DRAWINGS

The following drawings are only intended for schematic illustration and explanation of the present disclosure, and do not limit the scope of the present disclosure. In the drawings:
FIG. 1 illustrates a front view of an electronic paper screen module in the prior art.
FIG. 2 illustrates a rear view of an electronic paper screen module in the prior art.
FIG. 3 illustrates a first longitudinal cross-sectional view of an electronic paper screen module of the present disclosure.
FIG. 4 illustrates a first front view of an electronic paper screen module of the present disclosure.
FIG. 5 illustrates a first rear view of an electronic paper screen module of the present disclosure.
FIG. 6 illustrates a second longitudinal cross-sectional view of an electronic paper screen module of the present disclosure.
FIG. 7 illustrates a second front view of an electronic paper screen module of the present disclosure.
FIG. 8 illustrates a second rear view of an electronic paper screen module of the present disclosure.
FIG. 9 illustrates a third longitudinal cross-sectional view of an electronic paper screen module of the present disclosure.
FIG. 10 illustrates a third front view of an electronic paper screen module of the present disclosure.
FIG. 11 illustrates a third rear view of an electronic paper screen module of the present disclosure.
FIG. 12 illustrates a fourth longitudinal cross-sectional view of an electronic paper screen module of the present disclosure.
FIG. 13 illustrates a fourth front view of an electronic paper screen module of the present disclosure.
FIG. 14 illustrates a fourth rear view of an electronic paper screen module of the present disclosure.
FIG. 15 illustrates a fifth longitudinal cross-sectional view of an electronic paper screen module of the present disclosure.
FIG. 16 illustrates a sixth longitudinal cross-sectional view of an electronic paper screen module of the present disclosure.
FIG. 17 illustrates a seventh longitudinal cross-sectional view of an electronic paper screen module of the present disclosure.
FIG. 18 illustrates an eighth longitudinal cross-sectional view of an electronic paper screen module of the present disclosure.

### Reference numerals in the Background:

| | | | |
|---|---|---|---|
| 100: | thin-film transistor substrate; | 200: | LED lamp; |
| 300: | PCB board; | 400: | flexible circuit board. |

### Reference numerals in the present disclosure:

| | | | |
|---|---|---|---|
| 1: | substrate | 101: | glass plate |
| 102: | thin film transistor array; | 1021: | first light-transmitting portion; |
| 2: | electronic paper film; | 201: | second light-transmitting portion; |
| 3: | protective film; | 4: | electrical connection point; |
| 5: | first connecting member; | 6: | second connecting member; |
| 7: | integrated circuit | 8: | PCB board; |
| 9: | light-emitting element; | 10: | flexible circuit board; |
| 11: | light-transmitting channel; | 12: | first light-mixing element; |
| 13: | circuit board; | 14: | second light-mixing element. |

### DETAILED DESCRIPTION OF THE EMBODIMENTS

For a clearer understanding of the technical features, objectives and effects of the present disclosure, specific embodiments of the present disclosure will now be described with reference to the drawings.

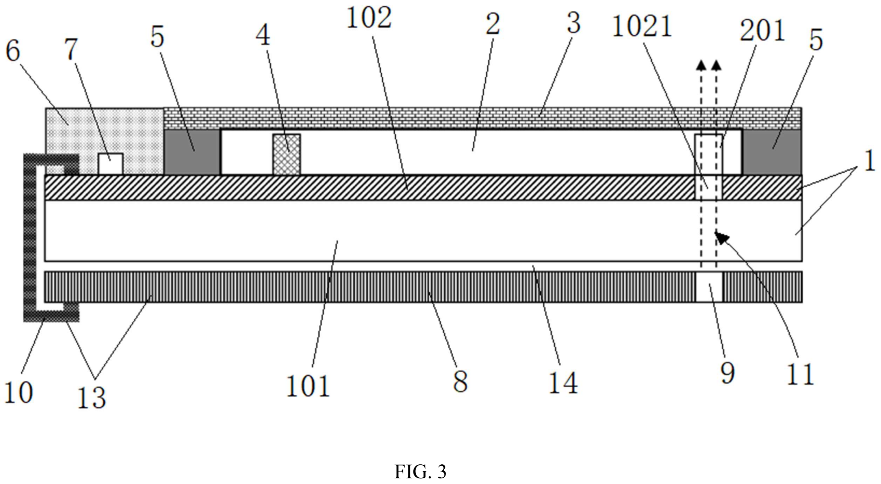

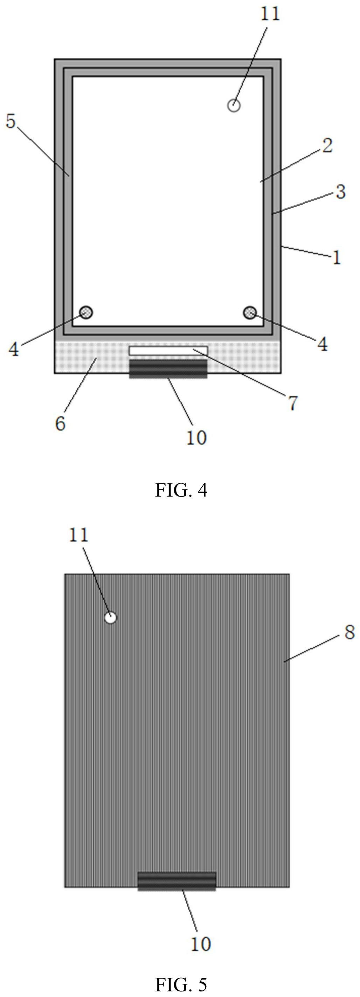

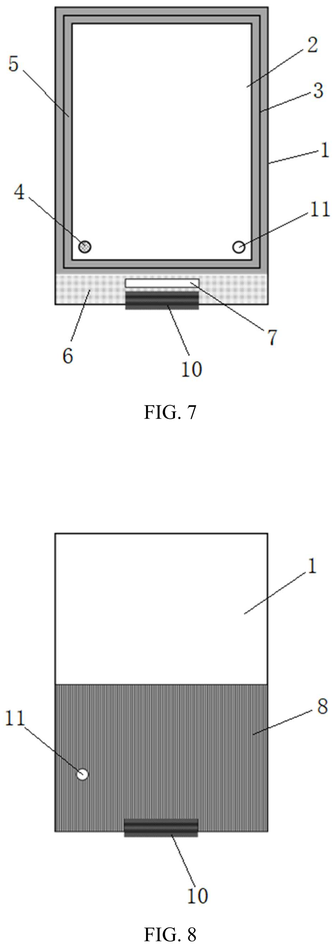

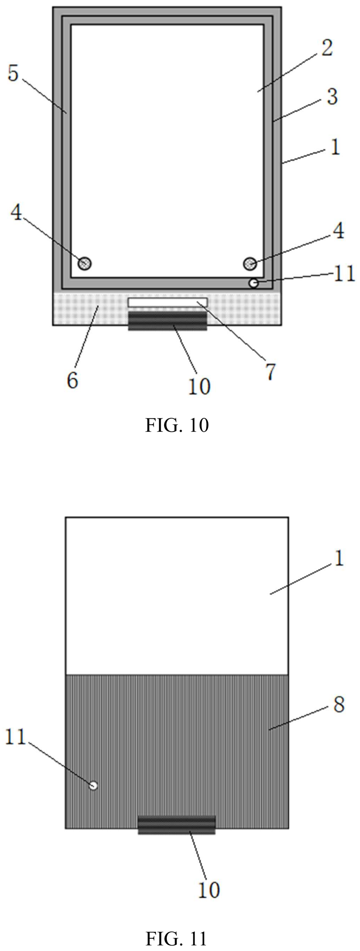

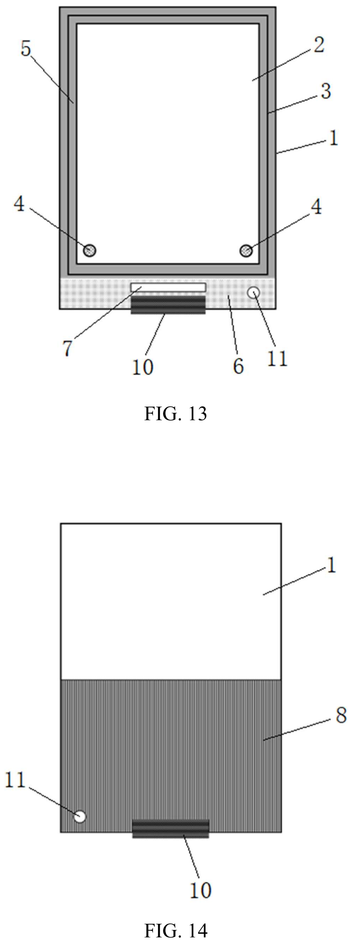

As illustrated in FIGS. 3 to 18, the present disclosure provides an electronic paper screen module, which includes a substrate 1, a circuit board 13 and a light-emitting element 9. The substrate 1 is provided with a first light-transmitting portion 1021. At least part of the circuit board 13 is stacked with the substrate 1. The light-emitting element 9 is disposed on the circuit board 13. Since the circuit board 13 and the substrate 1 are at least partially overlapped, the light-emitting element 9 can be disposed on the circuit board 13 at a location opposite to the first light-transmitting portion 1021, so that the light emitted by the light-emitting element 9 can pass through the first light-transmitting portion 1021 from one side of the substrate 1 to the other side facing away from the circuit board 13 (i.e., the light emitted by the light-emitting element 9 can pass through the substrate 1 due to the provision of the first light-transmitting portion 1021).

In the present disclosure, at least part of the circuit board 13 is stacked with the substrate 1, the first light-transmitting portion 1021 is formed in the substrate 1, and the light-emitting element 9 is disposed on the circuit board 13 and located opposite to the first light-transmitting portion 1021, so that the substrate 1 has the ability to efficiently transmit light by disposing the first light-transmitting portion 1021. Therefore, the light emitted by the light-emitting element 9 can pass through the first light-transmitting portion 1021 from one side of the substrate 1 to the other side facing away from the circuit board 13. This arrangement not only ensures the normal use of the light-emitting element 9 (status display, flashing alarm, etc.), but also eliminates the need to increase the area of the circuit board 13 for the placement of the light-emitting element 9. Consequently, it avoids the need to enlarge the bezel of the electronic paper screen, and ensures that the light-emitting element 9 still achieves a good light-emission effect within the range of the substrate 1, thereby contributing to reducing both the size and cost of the electronic paper screen.

Further, the light-emitting element 9 may be, but not limited to, an LED lamp.

In an optional embodiment of the present disclosure, as illustrated in FIGS. 3 to 18, the electronic paper screen module further includes an electronic paper film 2 (FPL) and a protective film 3 (PS). The substrate 1, the electronic paper film 2 and the protective film 3 are stacked in a direction from being close to the light-emitting element 9 to being far away from the light-emitting element 9. The electronic paper film 2 is used to display an image actually seen by human eyes. The electronic paper film 2 is closely attached to the substrate 1, so that an electric field is formed between the substrate 1 (i.e., the Pixel electrode of the substrate 1) and the electronic paper film 2 (i.e., the VCOM ITO electrode of the electronic paper film 2) to drive electronic ink in the electronic paper film 2 to display the image. To achieve good reflection characteristics, the electronic ink in the electronic paper film 2 contains densely distributed black particles, white particles and other colored particles, making the electronic paper film 2opaque. When the electronic ink in a certain region of the electronic paper film 2 is removed (while retaining the VCOM ITO electrode of the electronic paper film 2), the region from which the electronic ink has been removed can exhibit good light transmittance.

Further, the protective film 3 is made of a light-transmitting material, and is closely attached to and covers the electronic paper film 2 to protect it and isolate it from moisture. The protective film 3 may be made of a colorless and transparent film, which ensures that the protective film 3 has good light transmittance, so that the protective film 3 does not affect the light transmission while playing a protective role.

In this embodiment, an area of the protective film 3 is larger than that of the electronic paper film 2, and the protective film 3 may wrap the edge of the electronic paper film 2 to achieve optimal protection and moisture isolation.

In an optional embodiment of the present disclosure, as illustrated in FIGS. 3 to 5, the substrate 1 is provided with a first light-transmitting portion 1021, and the electronic paper film 2 is provided with a second light-transmitting portion 201. The first light-transmitting portion 1021, the second light-transmitting portion 201, and an area of the protective film 3 opposite to the second light-transmitting portion 201 together define a light-transmitting channel 11.

Specifically, as illustrated in FIGS. 3 to 5, the light-transmitting channel 11 is disposed within an upper right corner area of the electronic paper screen. Of course, the position of the light-emitting element 9 may also be adjusted as needed during actual production. In this embodiment, since no longer being limited by the light-emitting element 9, the size of the circuit board 13 can be reduced to a range overlapped with the substrate 1. Since the light emitted by the light-emitting element 9 needs to pass through the substrate 1, the electronic paper film 2, and the protective film 3 in sequence, the light-emitting element 9 should have good light transmittance in the emission direction of the light for effective light transmission. Since the protective film 3 is made of a light-transmitting material, no special treatment is required for it. For the first light-transmitting portion 1021 disposed on the substrate 1, an area without metal pattern may be formed in the substrate 1 at a corresponding position to achieve light transmission. The position of the first light-transmitting portion 1021 is opposite to that of the light-emitting element 9, and the size of the first light-transmitting portion 1021 should be greater than or equal to that of the light-emitting element 9. Of course, in a case where the requirement for light-transmitting intensity is not high, a partially light-transmitting area (i.e., an area that is semi-transparent or partially transparent rather than fully transparent) with a metal pattern may be formed in the substrate 1 at the corresponding position, and the position and the size of the partially light-transmitting area are set according to specific conditions. For the second light-transmitting portion 201 disposed on the electronic paper film 2, a light-transmitting area with electronic ink removed may be formed in the electronic paper film 2 at a corresponding position to achieve light transmission. The position of the second light-transmitting portion 201 is opposite to that of the light-emitting element 9, and the size of the second light-transmitting portion 201 should be greater than or equal to that of the light-emitting element 9. Of course, in a case where the requirement for light-transmitting intensity is not high, the size of the second light-transmitting portion 201 may be set according to specific conditions.

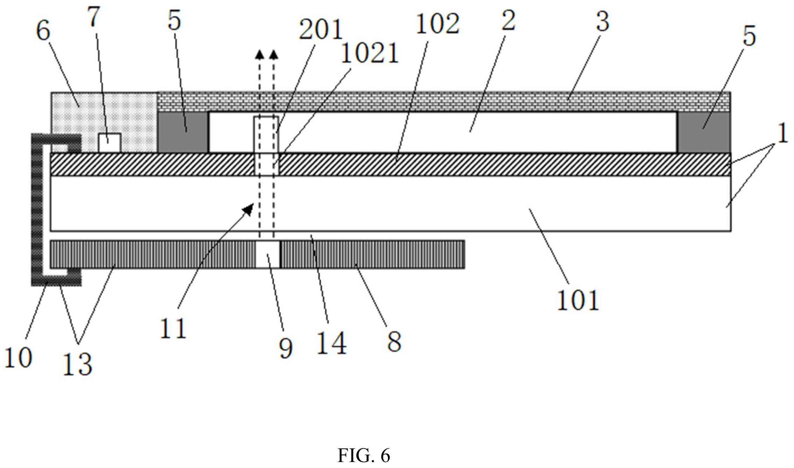

In an optional embodiment of the present disclosure, as illustrated in FIGS. 6 to 8, a plurality of electrical connection points 4 (i.e., Ag glue dots, primarily composed of conductive silver glue, exhibiting silvery metallic luster and being opaque) are disposed between the electronic paper film 2 and the substrate 1, and are used to connect electrodes of the substrate 1 (i.e., VCOM electrodes) to electrodes of the electronic paper film 2 (i.e., VCOM ITO electrodes), respectively. The electrical connection points 4 may be dot-shaped, or may be line-shaped (i.e., a plurality of electrical connection points 4 are connected to form a line). Alternatively, the electrical connection points 4 may be designed into any shape according to actual design requirements.

In this embodiment, as illustrated in FIGS. 6 to 8, the substrate 1 is provided with a first light-transmitting portion 1021, and the second light-transmitting portion 201 is located at a position of at least one of the electrical connection points 4. The first light-transmitting portion 1021, the second light-transmitting portion 201, and an area of the protective film 3 opposite to the second light-transmitting portion 201 together define a light-transmitting channel 11.

Specifically, as illustrated in FIGS. 6 to 8, the light-transmitting channel 11 is disposed at the position of the right electrical connection point 4 on the electronic paper screen. However, in actual products, the light-transmitting channel 11 may be disposed at the position of either one or two of the electrical connection points 4, and the number and the specific position of the electrical connection points 4 are not limited. In this embodiment, since no longer being limited by the light-emitting element 9, the size of the circuit board 13 can be reduced to a range overlapped with the substrate 1. Since the light emitted by the light-emitting element 9 needs to pass through the substrate 1, the electrical connection point 4, the electronic paper film 2, and the protective film 3 in sequence, the light-emitting element 9 should have good light transmittance in the emission direction of the light for effective light transmission. Since the protective film 3 is made of a light-transmitting material, no special treatment is required for it. For the first light-transmitting portion 1021 disposed on the substrate 1, an area without metal pattern may be formed in the substrate 1 at a corresponding position to achieve light transmission. The position of the first light-transmitting portion 1021 is opposite to that of the light-emitting element 9, and the size of the first light-transmitting portion 1021 should be greater than or equal to that of the light-emitting element 9. Of course, in a case where the requirement for light-transmitting intensity is not high, a partially light-transmitting area (i.e., an area that is semi-transparent or partially transparent rather than fully transparent) with a metal pattern may be formed in the substrate 1 at the corresponding position, and the position and the size of the partially light-transmitting area are set according to specific conditions. For the electrical connection points 4, the electrical connection point 4 located at the position of the light-transmitting channel 11 may be removed, or may be made of transparent conductive adhesive to form a light-transmitting area, thereby achieving light transmission. The position of the light-transmitting area is opposite to that of the light-emitting element 9, and the size of the light-transmitting area should be greater than or equal to that of the light-emitting element 9. In a case where the requirement for light-transmitting intensity is not high, the size of the light-transmitting area may be set according to specific conditions. Of course, in a case where the requirement for light-transmitting intensity is not high, a partially light-transmitting area (i.e., an area that is semi-transparent or partially transparent rather than fully transparent) may also be provided at a corresponding position of the electrical connection point 4, and the position and the size of the partially light-transmitting area are set according to specific conditions. For the second light-transmitting portion 201 disposed on the electronic paper film 2, a light-transmitting area with electronic ink removed may be formed in the electronic paper film 2 at a corresponding position to achieve light transmission. The position of the second light-transmitting portion 201 is opposite to that of the light-emitting element 9, and the size of the second light-transmitting portion 201 should be greater than or equal to that of the light-emitting element 9. Of course, in a case where the requirement for light-transmitting intensity is not high, the size of the second light-transmitting portion 201 may be set according to specific conditions.

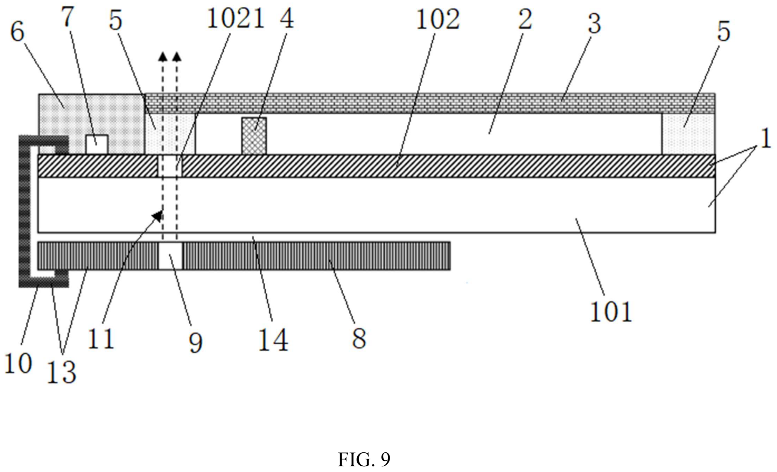

In an optional embodiment of the present disclosure, as illustrated in FIGS. 9 to 11, a first connecting member 5 made of a light-transmitting material is disposed between the protective film 3 and the substrate 1, and the first connecting member 5 is disposed around the periphery of the electronic paper film 2. The first connecting member 5 is made of a transparent or semi-transparent edge-sealing material. Further, the first connecting member 5 is made of an edge-sealing adhesive, which is disposed between the protective film 3 and the substrate 1 to further isolate moisture.

In this embodiment, as illustrated in FIGS. 9 to 11, the substrate 1 is provided with a first light-transmitting portion 1021, and the first light-transmitting portion 1021, an area of the first connecting member 5 opposite to the first light-transmitting portion 1021, and an area of the protective film 3 opposite to the first light-transmitting portion 1021 together define a light-transmitting channel 11.

Specifically, as illustrated in FIGS. 9 to 11, the light-transmitting channel 11 is disposed in a lower right corner area of the electronic paper screen. However, in actual products, the position of the light-transmitting channel 11 may be selected as any area corresponding to the first connecting member 5. In this embodiment, since no longer being limited by the light-emitting element 9, the size of the circuit board 13 can be reduced to a range overlapped with the substrate 1. Since the light emitted by the light-emitting element 9 needs to pass through the substrate 1, the first connecting member 5, and the protective film 3 in sequence, both the substrate 1 and the first connecting member 5 should have good light transmittance in the emission direction of the light for effective light transmission. Since the protective film 3 is made of a light-transmitting material, no special treatment is required for it. For the first light-transmitting portion 1021 disposed on the substrate 1, an area without metal pattern may be formed in the substrate 1 at a corresponding position to achieve light transmission. The position of the first light-transmitting portion 1021 is opposite to that of the light-emitting element 9, and the size of the first light-transmitting portion 1021 should be greater than or equal to that of the light-emitting element 9. Of course, in a case where the requirement for light-transmitting intensity is not high, a partially light-transmitting area (i.e., an area that is semi-transparent or partially transparent rather than fully transparent) with a metal pattern may be formed in the substrate 1 at the corresponding position, and the position and the size of the partially light-transmitting area are set according to specific conditions. For the first connecting member 5, a transparent edge-sealing adhesive with good light transmittance may be selected for it. Of course, in a case where the requirement for light transmission intensity is not high, a semi-transparent edge-sealing adhesive with partial light transmittance may be selected for the first connecting member 5.

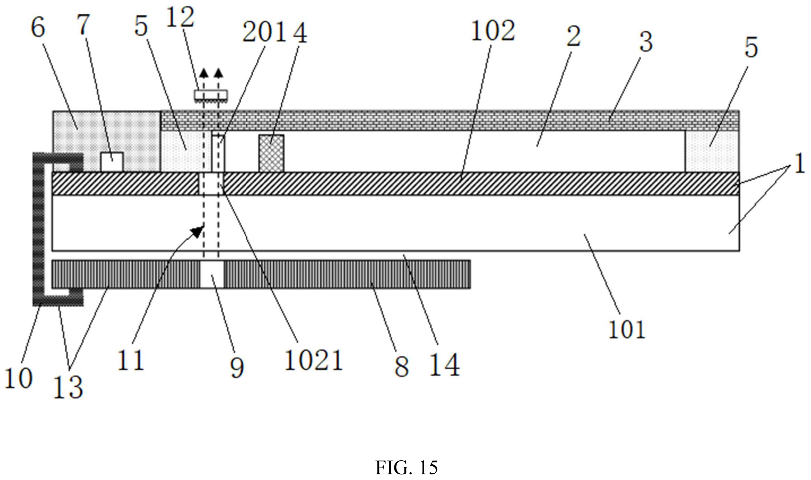

In an optional embodiment of the present disclosure, as illustrated in FIG. 15, the edge of the electronic paper film 2 is provided with a second light-transmitting portion 201, and the first light-transmitting portion 1021, the second light-transmitting portion 201, an area of the first connecting member 5 opposite to the first light-transmitting portion 1021, and an area of the protective film 3 opposite to the first light-transmitting portion 1021 together define a light-transmitting channel 11. In the emission direction of the light, a first light-mixing element 12 for uniform light emission is disposed downstream of the first connecting member 5 and the second light-transmitting portion 201, and is positioned opposite the first light-transmitting portion 1021.

Specifically, as illustrated in FIG. 15, the light-transmitting channel 11 is disposed at the edge of the electronic paper film 2, a part of the light-transmitting channel 11 is located on the electronic paper film 2, and the other part of the light-transmitting channel 11 is located on the first connecting member 5 (i.e., the edge-sealing adhesive).

At the position of the light-transmitting channel 11 corresponding to the electronic paper film 2, since the light emitted by the light-emitting element 9 needs to pass through the substrate 1, the electronic paper film 2, and the protective film 3 in sequence, both the substrate 1 and the electronic paper film 2 should have good light transmittance in the emission direction of the light for effective light transmission. Since the protective film 3 is made of a light-transmitting material, no special treatment is required for it. For the first light-transmitting portion 1021 disposed on the substrate 1, an area without metal pattern may be formed in the substrate 1 at a corresponding position to achieve light transmission. The position of the first light-transmitting portion 1021 is opposite to that of the light-emitting element 9, and the size of the first light-transmitting portion 1021 should be greater than or equal to that of the light-emitting element 9. Of course, in a case where the requirement for light-transmitting intensity is not high, a partially light-transmitting area (i.e., an area that is semi-transparent or partially transparent rather than fully transparent) with a metal pattern may be formed in the substrate 1 at the corresponding position, and the position and the size of the partially light-transmitting area are set according to specific conditions. For the second light-transmitting portion 201 disposed on the electronic paper film 2, a light-transmitting area with electronic ink removed may be formed in the electronic paper film 2 at a corresponding position to achieve light transmission. The position of the second light-transmitting portion 201 is opposite to that of the light-emitting element 9, and the size of the second light-transmitting portion 201 should be greater than or equal to that of the light-emitting element 9. Of course, in a case where the requirement for light-transmitting intensity is not high, the size of the second light-transmitting portion 201 may be set according to specific conditions.

At the position of the light-transmitting channel 11 corresponding to the first connecting member 5, since the light emitted by the light-emitting element 9 needs to pass through the substrate 1, the first connecting member 5 and the protective film 3 in sequence, the substrate 1 should have good light transmittance in the emission direction of the light for effective light transmission. Since the protective film 3 is made of a light-transmitting material, no special setting treatment is required for it. For the first light-transmitting portion 1021 disposed on the substrate 1, an area without metal pattern may be formed in the substrate 1 at a corresponding position to achieve light transmission. The position of the first light-transmitting portion 1021 is opposite to that of the light-emitting element 9, and the size of the first light-transmitting portion 1021 should be greater than or equal to that of the light-emitting element 9. Of course, in a case where the requirement for light-transmitting intensity is not high, a partially light-transmitting area (i.e., an area that is semi-transparent or partially transparent rather than fully transparent) with a metal pattern may be formed in the substrate 1 at the corresponding position, and the position and the size of the partially light-transmitting area are set according to specific conditions. For the first connecting member 5, a transparent edge-sealing adhesive with good light transmittance may be selected for it. Of course, in a case where the requirement for light transmission intensity is not high, a semi-transparent edge-sealing adhesive with partial light transmittance may be selected for the first connecting member 5.

In this embodiment, since a part of the light-transmitting channel 11 is located on the electronic paper film 2 and the other part of the light-transmitting channel 11 is located on the first connecting member 5, there is a difference in light emission intensity between the corresponding areas of the electronic paper film 2 and the first connecting member 5. In order to eliminate the difference in light emission intensity and achieve a good visual effect, the first light-mixing element 12 is provided in this embodiment to realize the uniformity of the light emission intensity. The first light-mixing element 12 may adopt a matte film or a light-mixing structure with a plurality of concave parts and a plurality of convex parts (i.e., the surface is uneven).

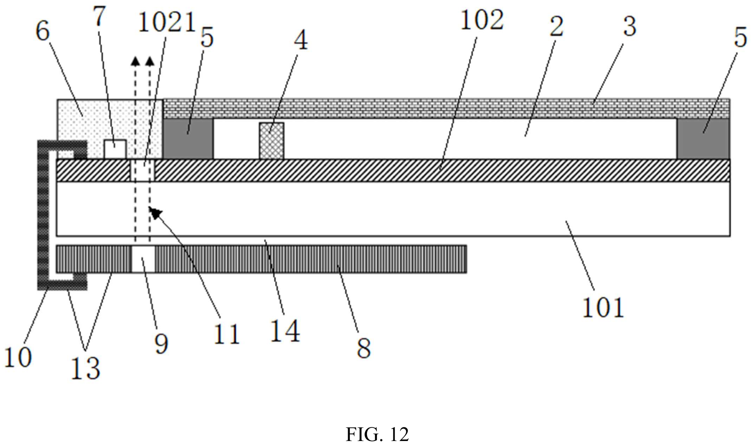

In an optional embodiment of the present disclosure, as illustrated in FIGS. 12 to 14, a second connecting member 6 made of a light-transmitting material is disposed on the substrate 1, and is used to fix a connection position between the circuit board 13 and the substrate 1. Since being located on the surface of the substrate 1, the second connecting member 6 can cover the wiring on the substrate 1 and the connection position between the circuit board 13 and the substrate 1, thereby protecting the circuit structure. The second connecting member 6 is made of a transparent or semi-transparent adhesive material. Further, the second connecting member 6 may be, but not limited to, a UV adhesive.

In this embodiment, as illustrated in FIGS. 12 to 14, the first light-transmitting portion 1021 is disposed in the substrate 1, and the first light-transmitting portion 1021 and an area of the second connecting member 6 opposite to the first light-transmitting portion 1021 together define a light-transmitting channel 11.

Specifically, as illustrated in FIGS. 12 to 14, the light-transmitting channel 11 is disposed in an area on the right side of a welding zone of the substrate 1 (i.e., the position of the second connecting member 6). However, in actual products, the light-transmitting channel 11 may be disposed at any area corresponding to the second connecting member 6. In this embodiment, since no longer being limited by the light-emitting element 9, the size of the circuit board 13 can be reduced to a range overlapped with the substrate 1. Since the light emitted by the light-emitting element 9 needs to pass through the substrate 1 and the second connecting member 6 in sequence, both the substrate 1 and the second connecting member 6 should have good light transmittance in the emission direction of the light for effective light transmission. For the first light-transmitting portion 1021 disposed on the substrate 1, an area without metal pattern may be formed in the substrate 1 at a corresponding position to achieve light transmission. The position of the first light-transmitting portion 1021 is opposite to that of the light-emitting element 9, and the size of the first light-transmitting portion 1021 should be greater than or equal to that of the light-emitting element 9. Of course, in a case where the requirement for light-transmitting intensity is not high, a partially light-transmitting area (i.e., an area that is semi-transparent or partially transparent rather than fully transparent) with a metal pattern may be formed in the substrate 1 at the corresponding position, and the position and the size of the partially light-transmitting area are set according to specific conditions. For the second connecting member 6, a transparent UV adhesive or any other transparent protective adhesive with good light transmittance may be selected for it. Of course, in a case where the requirement for light transmission intensity is not high, a semi-transparent UV adhesive with partial light transmittance or any other semi-transparent protective adhesive may be selected for the second connecting member 6.

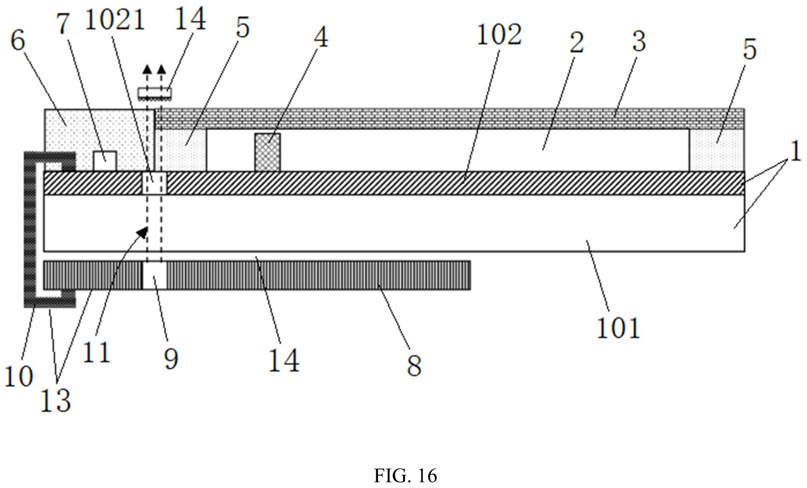

In another optional embodiment of the present disclosure, as illustrated in FIG. 16, the first light-transmitting portion 1021, an area of the second connecting member 6 opposite to the first light-transmitting portion 1021, an area of the first connecting member 5 opposite to the first light-transmitting portion 1021, and an area of the protective film 3 opposite to the first light-transmitting portion 1021 together define a light-transmitting channel 11. In the emission direction of the light, a second light-mixing element 14 for uniform light emission is disposed downstream of the first connecting member 5, the second connecting member 6 and the protective film 3, and is positioned opposite to the first light-transmitting portion 1021.

Specifically, as illustrated in FIG. 16, the light-transmitting channel 11 is disposed at the edge of the protective film 3, a part of the light-transmitting channel 11 is located on the first connecting member 5 (i.e. the edge-sealing adhesive) and the protective film 3, and the other part of the light-transmitting channel 11 is located on the second connecting member 6 (i.e. the UV adhesive or any other transparent protective adhesive).

At the light-transmitting channel 11 corresponding to the protective film 3, since the light emitted by the light-emitting element 9 needs to pass through the substrate 1, the first connecting member 5 and the protective film 3 in sequence, both the substrate 1 and the first connecting member 5 should have good light transmittance in the emission direction of the light for effective light transmission. Since the protective film 3 is made of a light-transmitting material, no special treatment is required for it. For the first light-transmitting portion 1021 disposed on the substrate 1, an area without metal pattern may be formed in the substrate 1 at a corresponding position to achieve light transmission. The position of the first light-transmitting portion 1021 is opposite to that of the light-emitting element 9, and the size of the first light-transmitting portion 1021 should be greater than or equal to that of the light-emitting element 9. Of course, in a case where the requirement for light-transmitting intensity is not high, a partially light-transmitting area (i.e., an area that is semi-transparent or partially transparent rather than fully transparent) with a metal pattern may be formed in the substrate 1 at the corresponding position, and the position and the size of the partially light-transmitting area are set according to specific conditions. For the first connecting member 5, a transparent edge-sealing adhesive with good light transmittance may be selected for it. Of course, in a case where the requirement for light transmission intensity is not high, a semi-transparent edge-sealing adhesive with partial light transmittance may be selected for the first connecting member 5.

At the light-transmitting channel 11 corresponding to the second connecting member 6, since the light emitted by the light-emitting element 9 needs to pass through the substrate 1 and the second connecting member 6 in sequence, both the substrate 1 and the second connecting member 6 have good light transmittance in the emission direction of the light for effective light transmission. Since the protective film 3 is made of a light-transmitting material, no special treatment is required for it. For the first light-transmitting portion 1021 disposed on the substrate 1, an area without metal pattern may be formed in the substrate 1 at a corresponding position to achieve light transmission. The position of the first light-transmitting portion 1021 is opposite to that of the light-emitting element 9, and the size of the first light-transmitting portion 1021 should be greater than or equal to that of the light-emitting element 9. Of course, in a case where the requirement for light-transmitting intensity is not high, a partially light-transmitting area (i.e., an area that is semi-transparent or partially transparent rather than fully transparent) with a metal pattern may be formed in the substrate 1 at the corresponding position, and the position and the size of the partially light-transmitting area are set according to specific conditions. For the second connecting member 6, a transparent UV adhesive with good light transmittance or any other transparent protective adhesive may be selected for it. Of course, in a case where the requirement for light transmission intensity is not high, a semi-transparent UV adhesive with partial light transmittance or any other semi-transparent protective adhesive may be selected for the second connecting member 6.

In this embodiment, since a part of the light-transmitting channel 11 is located on the protective film 3 and the first connecting member 5, and the other part of the light-transmitting channel 11 is located on the second connecting member 6, the corresponding areas of the protective film 3 and the first connecting member 5 exhibit a difference in light emission intensity compared to the corresponding area of the second connecting member 6. In order to eliminate the difference in light emission intensity and achieve a good visual effect, the second light-mixing element 14 is provided in this embodiment to realize the uniformity of the light emission intensity. The second light-mixing element 14 may adopt a matte film or a light-mixing structure with a plurality of concave parts and a plurality of convex parts (i.e., the surface is uneven).

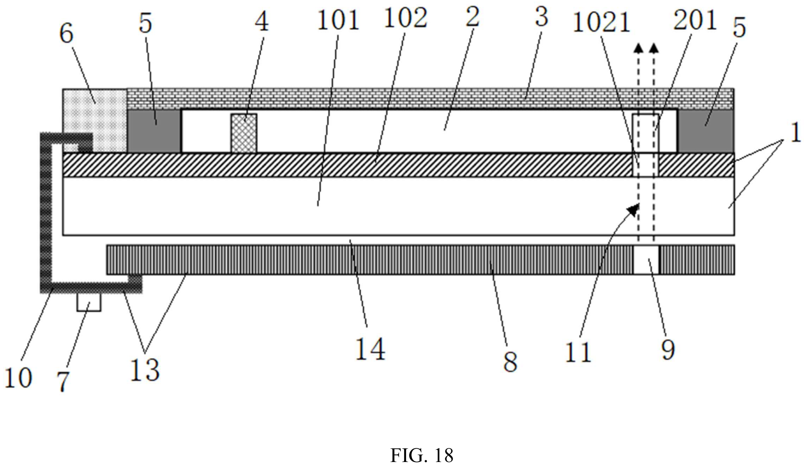

In an optional embodiment of the present disclosure, as illustrated in FIG. 3, the substrate 1 is a thin film transistor substrate, which includes a glass plate 101 and a thin film crystal array 102 disposed on the glass plate 101. A plurality of electrical connection points 4 (i.e., Ag glue dots) are disposed between the electronic paper film 2 and the substrate 1. A conductive structure is disposed on the glass plate 101, an integrated circuit 7 is disposed on the thin film crystal array 102 and located on an inner side of the first connecting member 5. The electrical connection points 4 are connected to the integrated circuit 7 through the conductive structure, and the integrated circuit 7 is connected to a control circuit on the circuit board 13, so as to supply power to the electronic paper screen through the circuit board 13, and control timing signals and data signals through the control circuit on the circuit board 13. Alternatively, as illustrated in FIG. 18, the integrated circuit 7 may be disposed on the circuit board 13. In this embodiment, by disposing the light-transmitting channel 11 on the substrate 1, it is also possible to dispose the light-emitting element 9 within the range of the substrate 1, so as to realize a narrow bezel design of the electronic paper screen module and achieve the purpose of reducing both the size and cost of the electronic paper screen. However, the specific circuit structure adopted in the electronic paper screen module and the position of the integrated circuit 7 are not limited in the present disclosure. In the present disclosure, the glass plate 101 is a light-transmitting plate.

Further, the second connecting member 6 may be a UV adhesive. The integrated circuit 7 may be disposed on the substrate 1 by means of thermocompression welding through the second connecting member 6. The circuit board 13 may be connected to the substrate 1 by means of thermocompression welding through the second connecting member 6.

In the present disclosure, as illustrated in FIG. 3, the substrate 1, the electronic paper film 2 and the protective film 3 are stacked, the VCOM electrode on the substrate 1 is connected to the VCOM ITO electrode on the electronic paper film 2 through the electrical connection point 4, and the substrate 1 is provided with the thin film crystal array 102. The electronic paper film 2 is used to display an image actually seen by human eyes, and an electric field is formed between the VCOM electrode on the substrate 1 and the VCOM ITO electrode on the electronic paper film 2, thereby driving electronic ink in the electronic paper film 2 to display the image. The integrated circuit 7 is connected to the circuit board 13, and the circuit board 13 is provided with a control circuit to realize a signal transmission between the control circuit and the electronic paper film 2. The received signal transmitted by the control circuit is converted by the integrated circuit 7 into a voltage and a timing signal that drive the electronic paper film 2 to refresh.

Further, as illustrated in FIG. 3, the circuit board 13 includes a flexible printed circuit board 10 and a PCB board 8 (a hard printed circuit board). The PCB board 8 is connected to the substrate 1 through the flexible printed circuit board 10 and is located at a position overlapping with the substrate 1, and the light-emitting element 9 is disposed on the PCB board 8. The PCB 8 is connected to the substrate 1 through the flexible printed circuit board 10, so that the PCB 8 can be disposed at the position overlapping with the substrate 1.

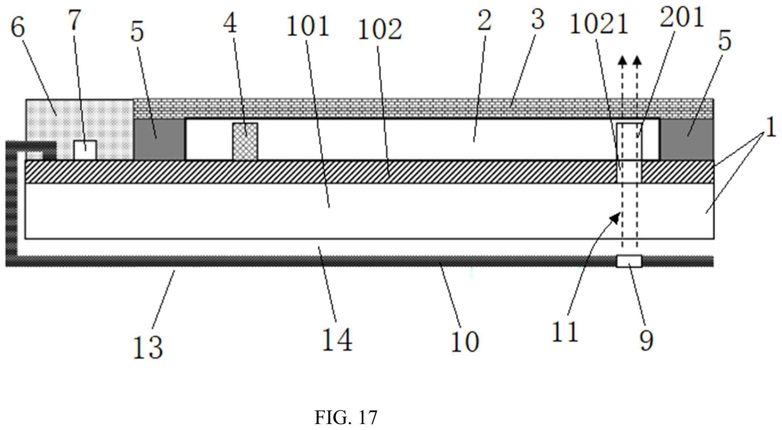

Further, as illustrated in FIG. 17, the circuit board 13 is only the flexible printed circuit board 10, and the circuits originally disposed on the PCB board 8 are all disposed on the flexible printed circuit board 10. Due to the bending performance of the flexible printed circuit board 10 itself, the flexible printed circuit board 10 can be extended to the position overlapping with the substrate 1, and the light-emitting element 9 is disposed on the flexible printed circuit board 10. In this embodiment, by disposing the light-transmitting channel 11 on the substrate 1, the light-emitting element 9 can also be disposed within the range of the substrate 1, so as to realize the narrow bezel design of the electronic paper screen module, and achieve the purposes of reducing the size and the cost of the electronic paper screen.

The characteristics and advantages of the electronic paper screen module of the present disclosure are as follows.

In the electronic paper screen module, the first light-transmitting portion 1021 is disposed within the substrate 1, so that the light-emitting element 9 can be disposed on the circuit board 13 (i.e., the flexible printed circuit board 10 and/or the PCB board 8) opposite to the first light-transmitting portion 1021. This enables the light-emitting element 9 to be located within the range of the substrate 1 and ensures that the light emitted by the light-emitting element 9 can be effectively transmitted through the substrate 1, thereby achieving a narrow bezel and a low cost of the electronic paper screen module.

Those described above are merely schematic embodiments of the present disclosure, and are not intended to limit the scope of the present disclosure. Any equivalent change or modification made by those skilled in the art without departing from the concept and the principles of the present disclosure should fall within the protection scope of the present disclosure.

## Claims

1. An electronic paper screen module, comprising:
a substrate provided with a first light-transmitting portion;
a circuit board, at least part of which is stacked with the substrate; and
a light-emitting element, which is disposed on the circuit board and located opposite to the first light-transmitting portion, so as to allow light emitted by the light-emitting element to pass through the first light-transmitting portion from one side of the substrate to the other side facing away from the circuit board.

2. The electronic paper screen module according to claim 1, further comprising an electronic paper film, and a protective film made of a light-transmitting material, wherein the substrate, the electronic paper film and the protective film are stacked in a direction from being close to the light-emitting element to being far away from the light-emitting element.

3. The electronic paper screen module according to claim 2, wherein the electronic paper film is provided with a second light-transmitting portion; and
the first light-transmitting portion, the second light-transmitting portion, and an area of the protective film opposite to the second light-transmitting portion together define a light-transmitting channel.

4. The electronic paper screen module according to claim 2, wherein a plurality of electrical connection points are disposed between the electronic paper film and the substrate, and are configured to connect electrodes of the substrate to electrodes of the electronic paper film, respectively;
the second light-transmitting portion is located at a position of at least one of the electrical connection points; and
the first light-transmitting portion, the second light-transmitting portion and the area of the protective film opposite to the second light-transmitting portion together define a light-transmitting channel.

5. The electronic paper screen module according to claim 3, wherein a first connecting member made of a light-transmitting material is disposed between the protective film and the substrate, and the first connecting member is disposed around a periphery of the electronic paper film; and
the first light-transmitting portion, an area of the first connecting member opposite to the first light-transmitting portion, and the area of the protective film opposite to the first light-transmitting portion together define the light-transmitting channel.

6. The electronic paper screen module according to claim 5, wherein the second light-transmitting portion is disposed in an edge position of the electronic paper film;
the first light-transmitting portion, the second light-transmitting portion, the area of the first connecting member opposite to the first light-transmitting portion, and the area of the protective film opposite to the first light-transmitting portion together define the light-transmitting channel; and
in an emission direction of the light, a first light-mixing element for uniform light emission is disposed downstream of the first connecting member and the second light-transmitting portion, and is positioned opposite the first light-transmitting portion.

7. The electronic paper screen module according to claim 5 or 6, wherein the first connecting member is made of a transparent or semi-transparent edge-sealing material.

8. The electronic paper screen module according to claim 5, wherein a second connecting member made of a light-transmitting material is disposed on the substrate, and is configured to fix a connection position between the circuit board and the substrate; and
the first light-transmitting portion and an area of the second connecting member opposite to the first light-transmitting portion together define the light-transmitting channel.

9. The electronic paper screen module according to claim 8, wherein the first light-transmitting portion, the area of the second connecting member opposite to the first light-transmitting portion, the area of the first connecting member opposite to the first light-transmitting portion, and the area of the protective film opposite to the first light-transmitting portion together define the light-transmitting channel; and
in an emission direction of the light, a second light-mixing element for uniform light emission is disposed downstream of the first connecting member, the second connecting member and the protective film, and is positioned opposite the first light-transmitting portion.

10. The electronic paper screen module according to claim 8 or 9, wherein the second connecting member is made of a transparent or semi-transparent adhesive material.

11. The electronic paper screen module according to claim 1, wherein the circuit board is a flexible printed circuit board, which is extended to a position overlapping with the substrate, and the light-emitting element is disposed on the flexible printed circuit board.

12. The electronic paper screen module according to claim 1, wherein the circuit board comprises a flexible printed circuit board and a PCB board, the PCB board is connected to the substrate through the flexible printed circuit board and is located at a position overlapping with the substrate, and the light-emitting element is disposed on the PCB board.
